# EUROPÄISCHE PATENTSCHRIFT

(11) **EP 4 028 204 B1**
(45) Veröffentlichungstag und Bekanntmachung des Hinweises auf die Patenterteilung: **01.01.2025**
(21) Anmeldenummer: 20747388.5
(22) Anmeldetag: 28.07.2020
(51) Int. Cl.: B23K 26/08, B23K 37/04, B23K 37/047

(54) **VERFAHREN ZUM POSITIONIEREN EINES BEARBEITUNGSKOPFES EINER LASERBEARBEITUNGSANLAGE SOWIE ZUGEHÖRIGE LASERBEARBEITUNGSANLAGE UND COMPUTERPROGRAMMPRODUKT**
METHOD FOR POSITIONING A MACHINING HEAD OF A LASER MACHINING SYSTEM, ASSOCIATED LASER MACHINING SYSTEM, AND COMPUTER PROGRAM PRODUCT
PROCÉDÉ DE POSITIONNEMENT D'UNE TÊTE D'USINAGE D'UN SYSTÈME D'USINAGE LASER, SYSTÈME D'USINAGE LASER ASSOCIÉ ET PRODUIT-PROGRAMME D'ORDINATEUR

(30) Priorität: 10.09.2019 DE 102019213685
(43) Veröffentlichungstag der Anmeldung: 20.07.2022
(73) Patentinhaber: TRUMPF Laser- und Systemtechnik SE, 71254 Ditzingen (DE)
(72) Erfinder: BRAUCHLE, Thomas, 71229 Leonberg (DE); DEMEL, Peter, 70597 Stuttgart (DE); SAUTER, Dietrich, 72555 Metzingen (DE); HAGENLOCHER, Tobias, 71254 Ditzingen (DE); KOHLLOEFFEL, Ralf, 74369 Löchgau (DE); KIEWELER, Thomas, 71299 Wimsheim (DE); REYER, Michael, 70825 Korntal-Münchingen (DE); WAHL, Thomas, 74343 Sachsenheim (DE); BAEUERLE, Roger, 75223 Niefern-Öschelbronn (DE)
(74) Vertreter: Trumpf Patentabteilung
(86) Internationale Anmeldenummer: PCT/EP2020/071175
(87) Internationale Veröffentlichungsnummer: WO 2021/047813

(56) Entgegenhaltungen:
- CN-A- 108 453 386
- US-A1- 2006 042 914
- US-A1- 2012 312 862
- US-A1- 2015 090 769
- US-A1- 2015 273 625

## Beschreibung

Die vorliegende Erfindung betrifft ein Verfahren zum Positionieren eines Bearbeitungskopfes einer Laserbearbeitungsanlage bei der Bearbeitung von Werkstücken. Die Erfindung betrifft weiterhin eine zur Durchführung des Verfahrens geeignete Laserbearbeitungsanlage und ein zugehöriges Computerprogrammprodukt.

Das Verfahren erfolgt mittels eines drehbaren Werkstückwechslers, durch den Werkstücke nacheinander in eine Bearbeitungsposition bewegt werden, wobei durch Bewegen des Werkstückwechslers ein bearbeitetes Werkstück aus der Bearbeitungsposition fortbewegt und ein als nächstes zu bearbeitendes Werkstück in die Bearbeitungsposition bewegt wird. Das Positionieren des Bearbeitungskopfes weist zumindest einen der folgenden Schritte auf:
a) Bewegen des Bearbeitungskopfes fort von einem bearbeiteten Werkstück,
b) Ausrichten des Bearbeitungskopfes zu einem zu bearbeitenden Werkstück,
c) Bewegen des Bearbeitungskopfes hin zu einem zu bearbeitenden Werkstück.

Ein solches Verfahren sowie eine zugehörige Laserbearbeitungsanlage mit einem bewegbaren Bearbeitungskopf, aus dem ein Laserstrahl zum Bearbeiten von Werkstücken austritt, mit einem bewegbaren, insbesondere drehbaren Werkstückwechsler zum Bewegen von Werkstücken in eine Bearbeitungsposition und mit einer Maschinensteuerung zum Steuern der Bewegungen des Werkstückwechslers und des Bearbeitungskopfes, sind hinlänglich bekannt. Beispielsweise werden in der US 2015/0273625 A1 (offenbarend den Oberbegriff der Ansprüche 1 und 3) und in der US 2015/0090769 A1 jeweils Verfahren beschrieben, bei denen Werkstücke mittels eines Werkstückwechslers zwischen zwei Bearbeitungsprozessen zu einer Bearbeitungsposition hin bzw. von der Bearbeitungsposition weg verfahren werden. Hierbei erfolgen die Bewegungen des Bearbeitungskopfes und des Werkstückwechslers sequentiell nacheinander, wobei immer höhere Dynamiken von der Maschine gefordert werden. Dies wirkt sich stark auf die Lebensdauer der Mechanik (Zahnstangen, Ritzel, Getriebe) und der Struktur (Brüche im Energiekettenhalter) aus.

Weitere Bearbeitungsverfahren, bei denen Werkstücke innerhalb von Stationen bearbeitet werden sind beispielsweise aus der US 2012/0312862 A1 oder aus der US 2006/0042914 A1 bekannt.

Auf die absolute Bearbeitungszeit bzw. Werkstücklaufzeiten von beispielsweise 40s ist die Wechselzeit (definiert von Ausschalten des Laserstrahls nach der Bearbeitung eines Werkstücks bis zum Einschalten des Laserstrahls am nächsten zu bearbeitenden Werkstück) von ca. 5,2s (Rotationswechsler) und 5,5s (Rundschalttisch) zu addieren. Die reine Wechselbewegung beim Übergang von einem Werkstück zum nächsten Werkstück beträgt beispielsweise bei einem Rotationswechsler 2,1s. In der Restzeit von 3,1s werden sequenzielle Schrittketten ausgeführt (Achssynchronisierung, Wegfahren des Bearbeitungskopfes vom Werkstück, Schwenken des Bearbeitungskopfes, Anfahren des Bearbeitungskopfes auf das Werkstück usw.), welche sich simultan zur Drehbewegung des Rundschalttischs/Rotationswechslers ausführen lassen.

Es ist die Aufgabe der vorliegenden Erfindung, ein Verfahren zum Positionieren eines Bearbeitungskopfes einer Laserbearbeitungsanlage bei der Werkstückbearbeitung anzugeben, bei dem die Zeitdauer zwischen der Bearbeitung der Werkstücke verringert wird und die mechanischen Komponenten der Laserbearbeitungsanlage nicht weiter belastet werden. Es ist weiter Aufgabe der Erfindung, eine Laserbearbeitungsanlage bereitzustellen, die zur Durchführung eines solchen Verfahrens geeignet ist.

Diese Aufgabe wird erfindungsgemäß durch ein Verfahren entsprechend Anspruch 1 gelöst.

Die Bewegungen des Bearbeitungskopfes und des Werkstückwechslers erfolgen nicht sequentiell nacheinander, wodurch die Wechselzeit zwischen der Bearbeitung zweier Werkstücke minimiert werden kann. Die Produktivität der Laserbearbeitungsanlage wird erhöht. Durch das simultane Positionieren des Bearbeitungskopfes zur Drehung des Werkstückwechslers können im Vergleich zu aus dem Stand der Technik bekannten Methoden 1,5s bis 2s an Zeit eingespart werden.

Die synchrone Bewegung des Werkstückwechslers und des Bearbeitungskopfes wird anhand der Abmessungen der Werkstücke, des Werkstückwechslers und des Bearbeitungskopfes gesteuert, um Kollisionen des Bearbeitungskopfes mit dem Werkstückwechslers oder den Werkstücken zu verhindern.

Erfindungsgemäß wird die synchrone Bewegung des Werkstückwechslers und des Bearbeitungskopfes durch eine Maschinensteuerung der Laserbearbeitungsanlage gesteuert. Durch die Maschinensteuerung lassen sich die Bewegungsabläufe von Werkstückwechsler und Bearbeitungskopf automatisieren. Dabei ist der Werkstückwechsler, bzw. die Achse, welche die Dreh- oder Verschiebebewegung des Werkstückwechslers festlegt, als Achse (NC-Achse) in ein Programm für die Maschinensteuerung eingebunden. Dadurch können Kollisionsbereiche, in denen Werkstücke, der Werkstückwechsler und der Bearbeitungskopf kollidieren können, durch die Maschinensteuerung überwacht werden. Die Bewegungen des Werkstückwechslers und des Bearbeitungskopfes werden an die Einstellungen des Werkstückwechslers (unter anderem rechtsdrehend, linksdrehend) angepasst und optimiert. Dazu sind typischerweise für die Bearbeitung eines Werkstücks zwei Programme für die numerische Steuerung (NC-Programme) vorhanden, die von der Laserbearbeitungsanlage in Abhängigkeit von den Einstellungen des Werkstückwechslers ausgewählt werden. Die Abmessungen der Werkstücke, des Bearbeitungskopfes, des Werkstückwechslers samt seinen Spannvorrichtungen für die Werkstücke sowie die Einstellungen des Werkstückwechslers werden in das Programm für die numerische Steuerung als Parameter übernommen.

Eine erfindungsgemäße Laserbearbeitungsanlage ist im Anspruch 3 definiert, und umfasst einen bewegbaren Bearbeitungskopf, aus dem ein Laserstrahl zum Bearbeiten von Werkstücken austritt, einen bewegbaren, insbesondere drehbaren Werkstückwechsler zum Bewegen von Werkstücken in eine Bearbeitungsposition und eine Maschinensteuerung zum Steuern der Bewegungen des Werkstückwechslers und des Bearbeitungskopfes, wobei die Maschinensteuerung programmiert ist, das erfindungsgemäße Verfahren durchzuführen.

Der Werkstückwechsler umfasst einen Rundschalttisch und/oder einen Rotationswechsler. Dies ermöglicht eine vergleichsweise raumsparende Ausgestaltung der Laserbearbeitungsanlage.

Ein erfindungsgemäßes Computerprogrammprodukt ist im Anspruch 4 definiert.

Weitere Vorteile und vorteilhafte Ausgestaltungen des Gegenstands der Erfindung sind den Ansprüchen entnehmbar.

Es zeigen:
- Fig. 1: eine schematische Darstellung einer erfindungsgemäßen Laserbearbeitungsanlage; und
- Fig. 2: eine schematische Darstellung eines erfindungsgemäßen Verfahrens zum Positionieren eines Bearbeitungskopfes der Laserbearbeitungsanlage bei der Werkstückbearbeitung.

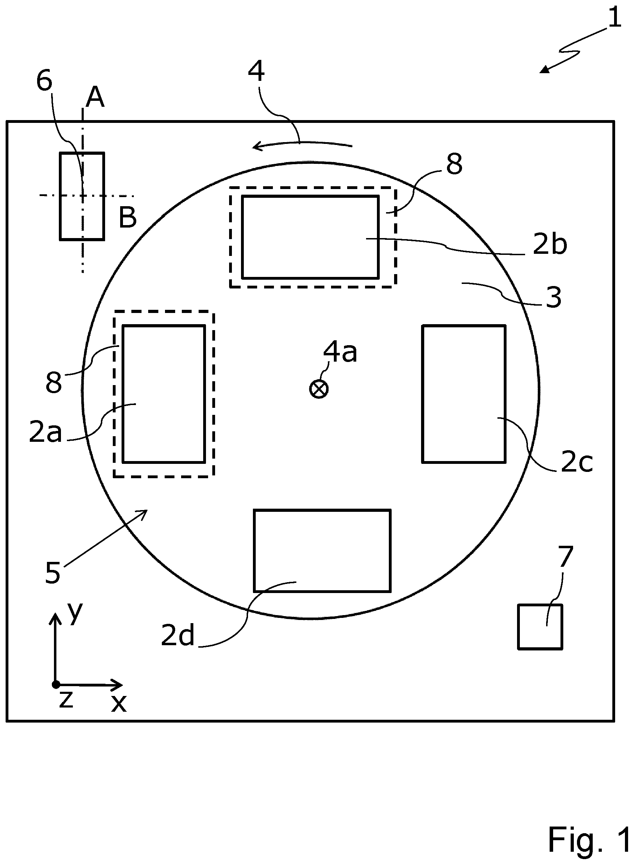

**Fig. 1** zeigt schematisch eine Laserbearbeitungsanlage **1** zur Bearbeitung von Werkstücken **2a-2d,** in einem Werkstückwechsler **3** eingespannt sind. Die Werkstücken 2a-2d werden durch den Werkstückwechsler 3 entlang einer Bewegungsrichtung, hier entlang einer Drehrichtung **4** um eine Drehachse **4a,** in eine Bearbeitungsposition **5** bewegt. In dieser Bearbeitungsposition 5 wird jeweils ein Werkstück 2a-2d von einem Laserstrahl (nicht gezeigt), welcher aus einem Bearbeitungskopf **6** austritt, bearbeitet, insbesondere in einem Schneidvorgang. Vor der Werkstückbearbeitung wird der Bearbeitungskopf 6 entlang der **X-, Y-, Z**-Achsen hin zu dem zu bearbeitenden Werkstück 2a bewegt und ggf. um zwei horizontale Schwenkachsen **A, B** geschwenkt, um den Laserstrahl auf die Bearbeitungsposition 5 bzw. auf das zu bearbeitende Werkstück 2a auszurichten. Nach der Werkstückbearbeitung wird der Bearbeitungskopf 6 entlang der X-, Y-, Z-Achsen fort von dem bearbeiteten Werkstück 2a bewegt, um eine Kollision mit dem Werkstückwechsler 3 oder mit den Werkstücken 2a-2d auszuschließen.

Durch Drehen des Werkstückwechslers 3 um 90° in der Drehrichtung 4 wird das bearbeitete Werkstück 2a aus der Bearbeitungsposition 5 in eine Entladeposition fortbewegt und das als nächstes zu bearbeitende Werkstück 2b in die Bearbeitungsposition 5 bewegt. Gleichzeitig (synchron) bzw. hauptzeitparallel mit der 90°-Drehung des Werkstückwechslers 3 erfolgt die Bewegung des Bearbeitungskopfes 6 entlang den X-, Y-, Z-Achsen und ggf. um die A- und B-Achsen, um so die Zeitdauer zwischen der Bearbeitung zweier Werkstücke zu verringern und die Produktivität der Laserbearbeitungsanlage zu steigern. Durch die simultane Bewegung des Bearbeitungskopfes 6 zur Drehung des Werkstückwechslers 3 können im Vergleich zu nicht simultanen Bewegungen je Werkstück ca. 1,5s bis 2s an Zeit eingespart werden.

Zur Steuerung und Synchronisierung der Bewegungen von Werkstückwechsler 3 und Bearbeitungskopf 6 weist die Laserbearbeitungsanlage 1 eine Maschinensteuerung **7** auf. Die Steuerung erfolgt derart, dass Kollisionen des jeweiligen Werkstücks 2a-2d und des Werkstückwechslers 3 mit dem Bearbeitungskopf 6 vermieden werden. Dazu müssen die Bewegungen von Werkstückwechsler 3 und Bearbeitungskopf 6 in potentiellen Kollisionsbereichen **8** um die Werkstücke 2a-2d herum präzise aufeinander abgestimmt werden.

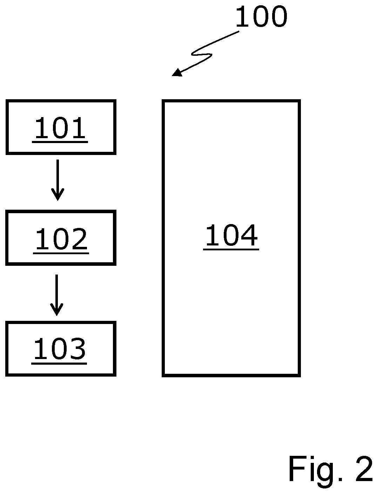

In **Fig. 2** ist schematisch ein Verfahren **100** zum Positionieren des Bearbeitungskopfes 6 beim Wechsel von einem bearbeiteten Werkstück 2a zu einem als nächstes zu bearbeitenden Werkstück 2b dargestellt. Die Positionierung des Bearbeitungskopfes 6 umfasst drei Schritte **101-103,** von denen mindestens einer, vorzugsweise aber, wie in Fig. 2 gezeigt, alle synchron bzw. hauptzeitparallel mit der Bewegung des Werkstückwechslers 3 (Schritt **104)** beim Wechsel von dem bearbeiteten Werkstück 2a zu dem als nächstes zu bearbeitenden Werkstück 2b erfolgen.

In dem ersten Schritt 101 wird der Bearbeitungskopf 6 von dem bearbeiteten Werkstück 2a fortbewegt.

In dem anschließenden zweiten Schritt 102 wird der Bearbeitungskopf 6 auf die Bearbeitungsposition des als nächstes zu bearbeitenden Werkstücks 2b ausgerichtet.

In dem darauf folgenden dritten Schritt 103 wird der Bearbeitungskopf 6 zu dem zu bearbeitenden Werkstück 2b hinbewegt und dann erfolgt die Werkstückbearbeitung mittels des Laserstrahls.

Bei nicht gezeigten Verfahrensvarianten werden, anders als in Fig. 2 gezeigt, beim Positionieren des Bearbeitungskopfes 6 nicht alle drei Schritte 101-103 ausgeführt, sondern nur einer oder zwei der Schritte 101-103. So können beim Positionieren des Bearbeitungskopfes 6 beispielsweise nur der erste und der zweite Schritt 101, 102, also ohne auch den dritten Schritt 103, ausgeführt werden.

## Patentansprüche

1. Verfahren (100) zum Positionieren eines Bearbeitungskopfes (6) einer Laserbearbeitungsanlage (1) bei der Bearbeitung von Werkstücken (2a-2d), welche mittels eines drehbaren Werkstückwechslers (3) nacheinander in eine Bearbeitungsposition (5) bewegt werden, wobei durch Bewegen des Werkstückwechslers (3) ein bearbeitetes Werkstück (2a) aus der Bearbeitungsposition (5) fortbewegt und ein als nächstes zu bearbeitendes Werkstück (2b) in die Bearbeitungsposition (5) bewegt wird und wobei das Positionieren des Bearbeitungskopfes (6) zumindest einen der folgenden Schritte aufweist:
a) Bewegen des Bearbeitungskopfes (6) fort von dem bearbeiteten Werkstück (2a),
b) Bewegen des Bearbeitungskopfes (6), um den Laserstrahl auf das als nächstes zu bearbeitende Werkstück (2b) auszurichten,
c) Bewegen des Bearbeitungskopfes (6) hin zu dem als nächstes zu bearbeitenden Werkstück (2b),
**dadurch gekennzeichnet,**
**dass** zumindest einer der Schritte a) bis c) synchron mit der Bewegung des Werkstückwechslers (3) beim Wechsel von einem bearbeiteten Werkstück (2a) zu einem als nächstes zu bearbeitenden Werkstück (2b) durchgeführt wird, wobei die synchrone Bewegung des Werkstückwechslers (3) und des Bearbeitungskopfes (6) durch eine Maschinensteuerung (7) der Laserbearbeitungsanlage (1) und anhand der Abmessungen der Werkstücke (2a-2d), des Werkstückwechslers (3) und des Bearbeitungskopfes (6) gesteuert wird, wobei eine Achse, welche die Drehbewegung des Werkstückwechslers (3) festlegt, als Achse in ein Programm für die Maschinensteuerung (7) eingebunden wird, wobei die Abmessungen der Werkstücke (2a-2d), des Bearbeitungskopfes (6), des Werkstückwechslers (3) samt seinen Spannvorrichtungen für die Werkstücke (2a-2d) sowie die Einstellungen des Werkstückwechslers (3) in das Programm für die Maschinensteuerung (7) als Parameter übernommen werden und wobei die Bewegungen des Werkstückwechslers (3) und des Bearbeitungskopfes (6) an die Einstellungen des Werkstückwechslers (3) angepasst werden.

2. Verfahren nach Anspruch 1, **dadurch gekennzeichnet, dass** alle Schritte a) bis c) synchron mit der Bewegung des Werkstückwechslers (3) durchgeführt werden.

3. Laserbearbeitungsanlage (1) mit einem bewegbaren Bearbeitungskopf (6), aus dem ein Laserstrahl zum Bearbeiten von Werkstücken (2a-2d) austritt, **gekennzeichnet durch**:
einen drehbaren Werkstückwechsler (3), der einen Rundschalttisch und/oder einen Rotationswechsler umfasst, zum Bewegen von Werkstücken (2a-2d) in eine Bearbeitungsposition (5),
eine Maschinensteuerung (7) zum Steuern der Bewegungen des Werkstückwechslers (3) und des Bearbeitungskopfes (6), wobei die Maschinensteuerung (7) so programmiert ist, das Verfahren nach einem der vorhergehenden Ansprüche durchzuführen.

4. Computerprogrammprodukt, welches Codemittel aufweist, die alle Schritte des Verfahrens nach einem der Ansprüche 1 bis 2 ausführt, wenn das Programm auf einer Maschinensteuerung (7) der Laserbearbeitungsanlage (1) nach Anspruch 3 abläuft.

## Claims

1. A method (100) for positioning a machining head (6) of a laser machining system (1) during the machining of workpieces (2a-2d) which are moved into a machining position (5) successively using a rotatable workpiece changer (3), wherein by moving the workpiece changer (3) a machined workpiece (2a) is moved away from the machining position (5) and a next workpiece (2b) to be machined is moved into the machining position (5), and wherein the positioning of the machining head (6) comprises at least one of the following steps:
a) moving the machining head (6) away from the machined workpiece (2a),
b) moving the machining head (6) in order to orient the laser beam onto the next workpiece (2b) to be machined,
c) moving the machining head (6) toward the next workpiece (2b) to be machined,
**characterized in that**
at least one of steps a) to c) is carried out synchronously with the movement of the workpiece changer (3) when changing from one machined workpiece (2a) to a next workpiece (2b) to be machined, wherein the synchronous movement of the workpiece changer (3) and the machining head (6) is controlled by a machine controller (7) of the laser machining system (1) using the dimensions of the workpieces (2a-2d), the workpiece changer (3) and the machining head (6), wherein an axis that establishes the rotational movement of the workpiece changer (3) is integrated into a program for the machine controller (7) as the axis, wherein the dimensions of the workpieces (2a-2d), the machining head (6), the workpiece changer (3) and all of its clamping devices for the workpieces (2a-2d), and the settings of the workpiece changer (3) are included in the program for the machine controller (7) as parameters, and wherein the movements of the workpiece changer (3) and the machining head (6) are adapted to the settings of the workpiece changer (3).

2. The method according to claim 1, **characterized in that** all steps a) to c) are carried out synchronously with the movement of the workpiece changer (3).

3. A laser machining system (1) having a movable machining head (6) from which a laser beam for machining workpieces (2a-2d) emerges,
**characterized by**:
a rotatable workpiece changer (3) comprising a rotary indexing table and/or a rotational changer for moving workpieces (2a-2d) into a machining position (5),
a machine controller (7) for controlling the movements of the workpiece changer (3) and the machining head (6), wherein the machine controller (7) is programmed to carry out the method according to one of the preceding claims.

4. A computer program product comprising coding means which carry out all steps of the method according to one of claims 1 to 2 when the program is being run on a machine controller (7) of the laser machining system (1) according to claim 3.

## Revendications

1. Procédé (100) de positionnement d'une tête d'usinage (6) d'une installation d'usinage au laser (1) lors de l'usinage de pièces (2a-2d), lesquelles sont déplacées l'une après l'autre dans une position d'usinage (5) au moyen d'un changeur de pièces (3) rotatif, dans lequel, en déplaçant le changeur de pièces (3), une pièce usinée (2a) est éloignée de la position d'usinage (5) et une pièce à usiner (2b) suivante est déplacée dans la position d'usinage (5), et dans lequel le positionnement de la tête d'usinage (6) présente au moins une des étapes suivantes :
a) déplacement de la tête d'usinage (6) à l'écart de la pièce usinée (2a),
b) déplacement de la tête d'usinage (6) afin de diriger le faisceau laser sur la pièce à usiner (2b) suivante,
c) déplacement de la tête d'usinage (6) vers la pièce à usiner (2b) suivante,
**caractérisé en ce**
**qu'**au moins une des étapes a) à c) est exécutée de manière synchrone avec le déplacement du changeur de pièces (3) lors du changement d'une pièce usinée (2a) à une pièce à usiner (2b) suivante, dans lequel le déplacement synchrone du changeur de pièces (3) et de la tête d'usinage (6) est commandé par une commande de machine (7) de l'installation d'usinage au laser (1) et à l'aide des dimensions des pièces (2a-2d), du changeur de pièces (3) et de la tête d'usinage (6), dans lequel un axe, lequel détermine le déplacement rotatif du changeur de pièces (3), est intégré en tant qu'axe dans un programme pour la commande de machine (7), dans lequel les dimensions des pièces (2a-2d), de la tête d'usinage (6), du changeur de pièces (3) y compris ses dispositifs de serrage pour les pièces (2a-2d) ainsi que les réglages du changeur de pièces (3) sont repris comme paramètres dans le programme pour la commande de machine (7) et dans lequel les déplacements du changeur de pièces (3) et de la tête d'usinage (6) sont adaptés aux réglages du changeur de pièces (3).

2. Procédé selon la revendication 1, **caractérisé en ce que** toutes les étapes a) à c) sont exécutées de manière synchrone avec le déplacement du changeur de pièces (3).

3. Installation d'usinage au laser (1) présentant une tête d'usinage (6) mobile, de laquelle sort un faisceau laser pour l'usinage de pièces (2a-2d),
**caractérisée par** :
un changeur de pièces (3) rotatif, qui comprend un plateau tournant et/ou un changeur à rotation, pour le déplacement de pièces (2a-2d) dans une position d'usinage (5),
une commande de machine (7) pour la commande des déplacements du changeur de pièces (3) et de la tête d'usinage (6), dans laquelle la commande de machine (7) est programmée pour exécuter le procédé selon l'une des revendications précédentes.

4. Produit de programme informatique, lequel présente des éléments de codage, qui réalise toutes les étapes du procédé selon l'une des revendications 1 à 2, lorsque le programme est exécuté sur une commande de machine (7) de l'installation d'usinage au laser (1) selon la revendication 3.
